Europäisches Patentamt

European Patent Office

Office européen des brevets

(11) Publication number: **0 195 838**
**B1**

(12) **EUROPEAN PATENT SPECIFICATION**

(45) Date of publication of patent specification: **06.12.89**

(51) Int. Cl.⁴: **B 23 D 77/00,** B 23 D 77/12

(21) Application number: **85103691.3**

(22) Date of filing: **27.03.85**

(54) Reamer with unequally spaced flutes.

(43) Date of publication of application:
**01.10.86 Bulletin 86/40**

(45) Publication of the grant of the patent:
**06.12.89 Bulletin 89/49**

(84) Designated Contracting States:
**DE FR GB SE**

(56) References cited:
**CH-A- 419 788**
**CH-A- 494 611**
**DE-C- 385 901**
**DE-C- 546 245**
**DE-C- 560 567**
**FR-A- 702 342**
**FR-A-2 516 830**
**GB-A- 563 402**
**US-A-3 460 410**

(73) Proprietor: **ROCKWELL INTERNATIONAL CORPORATION**
**Post Office Box 92098 North American Aircraft Division**
**Los Angeles, CA 90009 (US)**

(72) Inventor: **Arnold, Wesley C.**
**9917 E. Rosecrans Avenue**
**Bellflower, Ca. 90706 (US)**

(74) Representative: **Wagner, Karl H. et al**
**WAGNER & GEYER Patentanwälte**
**Gewürzmühlstrasse 5 Postfach 246**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Background of the invention

#### 1. Field of invention

The invention relates to the field of cutting tools, and, in particular to reamers for use in making tapered holes.

#### 2. Description of prior art

Reaming a taper requires greatly enlarging one end of the hole, with this enlargement gradually decreasing toward the other end. Thus, a tapered reamer, instead of being a finishing tool is, in reality, required to remove a considerable amount of material. Furthermore, a tapered reamer's cutting surface at the finish of the operation, is engaged throughout the entire length of the hole. Because of this, tapered reamers are subjected to much greater torsional strains than the ordinary straight reamers that cuts only on the end. The tendency, therefore, is to chatter, rifle, cut out-of-round, or otherwise produce unacceptable surface finishes. Conventional tapered reamers also require high thrust and torque levels and thus have short lives. There is also a possibility of flute chipping.

A typical application for such reamers is in the preparation of holes for Taper Lok fasteners. The problems mentioned above are multiplied because, in most Taper Lok fasteners applications, the holes to be reamed extends through a multiple number of parts, which may be made of different materials. Prior methods of preparing the hole required the drilling of a pilot hole, rough reaming, and fine reaming with a six fluted reamer. Quite often the hole has to be finished off with a hand reamer. Obviously, this is a time consuming and expensive procedure.

Most unacceptable surface finishes in straight or tapered holes are caused by vibrations or chatter. This problem was recognized in US Patent No. 265,998, "Reamer" by G. R. Valentine. Valentine discloses a cylindrical shank having a plurality of sets of cutting ribs equally spaced about the longitudinal axis of the shank. Each set of cutters comprises a first cutter aligned with the longitudinal axis of the shank and a second cutter at a slight angle to the longitudinal axis. These latter angled or diagonal cutter ribs alternate from right to left and from left to right. While such a configuration would probably reduce chattering in cylindrical bore, a tapered version would not have the required effectiveness when reaming tapered holes.

GB—A—563 402 discloses a cylindrical or tapered reamer having straight or helical cutting edges with the side edges being spaced apart at unequal distances. Preferably, the spacing is arranged such that it progressively diminishes around the reamer. CH—A—494 611 discloses a reamer having cutting edges having angular unevenly arranged cutting edges. DE—C—546 245 discloses a conical shaped reamer having two or more cutting edges with different pitch.

Accordingly, it is a general object of the present invention to provide a reamer for making tapered holes that reduces or eliminates surface impefections.

It is another object of the present invention to provide a reamer with an extended life.

It is a further object of the present invention to provide a reamer which reduces thrust and torque load requirements of the driver.

### Summary of the invention

The invention is directed to a reamer as set forth in claim 1 or 9. Preferred embodiments are disclosed in the dependent claims.

The features of the claimed invention, both as to its organization and its method of operation, together with further objects and advantages thereof, will be better understood from the following description in connection with the accompanying drawings in which presently preferred embodiments of the invention are illustrated by way of examples. It is to be expressly understood, however, that the drawings are for purposes of illustration and description only, and are not intended as a definition of the limits of the invention.

### Brief description of the drawings

Fig. 1 is a side elevation view of a first, preferred embodiment of the reamer having misindexed helical cutting flutes.

Fig. 1a is a partial view of the reamer shown in Fig. 1 illustrating a modification thereto.

Fig. 2 is an enlarged cross-sectional view of the reamer illustrated in Fig. 1 along the line 2—2.

### Description of the preferred embodiments

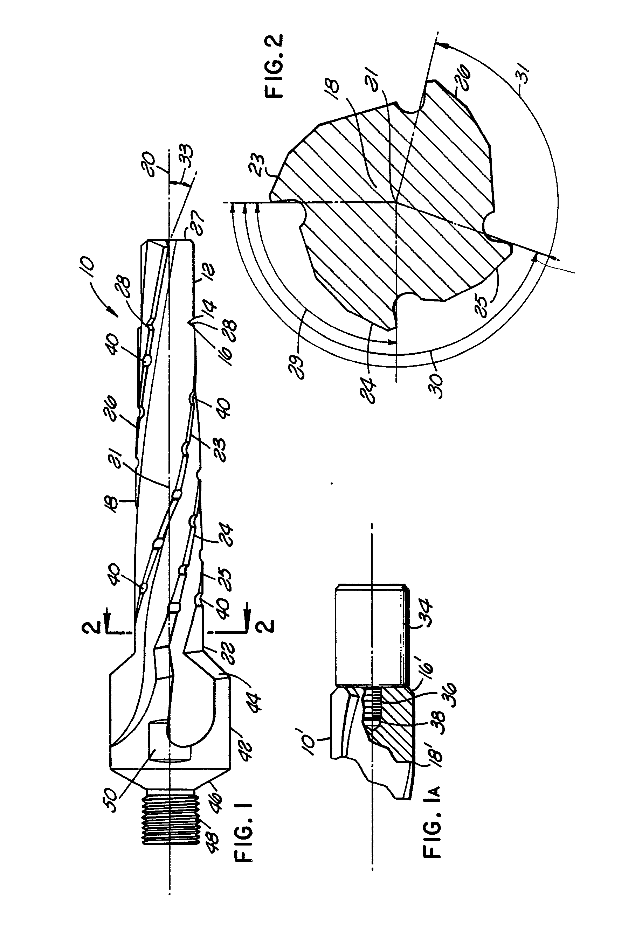

Illustrated in Fig. 1 is a side elevation view of a presently preferred embodiment of the reamer designated by numeral 10. Fig. 2 is a cross sectional view of the reamer 10 illustrated in Fig. 1 along the line 2—2. The reamer 10 comprises a cylindrical forward guide portion or core 12 having a first end 14 coupled to a first end 16 of a conical rear portion or core 18, such that their longitudinal axes 20 and 21, respectively, are coincident. The rear portion 18 tapers outwardly to a second end 22 with the taper angle being equal to the required taper of the hole to be reamed. The rear portion 18 has four helical cutting flutes extending continuously along the longitudinal axis 21 as shown, designated by numerals 23, 24, 25 and 26.

The forward portion 12 is normally used only as a guide to center the rear portion 18 with the hole to be reamed, and also provides support for the cutting edges as torque is applied but, as can be seen, the flutes 23—26 are extended onto the forward guide portion 12 to its second end 27. This is done, because, such reamers are usually machined or ground, and being able to begin the metal removal from the second end 27 greatly faclitates reamer manufacture. The portion of the flutes 23—26 extending over the forward guide portion 12 are normally non-cutting. Thus, a cutter relief, in the form of a notch 28, is incorporated in each of the flutes 23—26 at the end 16 of the rear portion 18 to provide a start for the cutting edges and to reduce cutting loads on said flutes (only the notch 28 on the flutes 23 and 26 is shown). Of course the flutes 23—26 on the forward portion 12 could be used to make a cylindrical enlargement of the hole prior to tapering, but it is not common practice.

The flutes 23—26 are misindexed about the coincident longitudinal axes 20 and 21, thus they are unequally spaced from each other. By doing so, it has been found that resonances are damped out eliminating chatter. Flute spacing is critical in this regard. Flutes 24, 25, and 26 should be spaced from the flute 23 by an angle 29, equal to about 90 degrees, an angle 30 equal to about 160 degrees, and an angle 31 equal to about 255 degrees, respectively. This spacing is also important for chip clearance in that too small a spacing between flutes can result in flute breakage. The helix angle 33 for all flutes is also critical. This should be about 15 degrees. A lesser angle will likely result in chatter and rifling while a greater angle will likely tend to cause the reamer to screw into the hole and break. This spacing also facilitates manufacture of the reamer.

More flutes can be added but the increase in performance has been presently found not to warrant the increased manufacturing costs.

It is of course possible to provide a reamer without flutes on the forward portion 12. Illustrated in Fig. 1a is a modified version of the reamer illustrated in Fig. 1. The reamer 10' comprises a conical rear portion 18'. A guide portion 34 incorporates a threaded member 36 adapted to engage a threaded hole 38 in the end 16' of the rear portion 18' for attachment thereto.

Again referring to Fig. 1, it can be seen that the flutes 23—26 incorporate a plurality of chip breaking notches 40 that run along the rear portion 18. In order to provide better chip break-up, a reduction in cutting pressure, and an even smoother finish, the notches 40 on each flute are staggered with those located on each preceding flute.

Additionally, if the holes to be reamed also are to be countersunk (for example holes for flush head fasteners) a countersink cutter can be incorporated by attaching a cylindrical body 42 having a countersink cutter 44 at the second end 22 of the rear portion 18. Thus reaming and countersinking can be accomplished in one operation.

Furthermore, a threaded member 48 adapted to attach the reamer 10 to a power driver (not shown) is coupled at the end 46 of the body 42. Wrench flats 50 (only one of which is shown) are provided on the cylinder portion 42 to facilitate attaching of the reamer to a powered driver.

Having thus described the invention, it is obvious that numerous modifications and departures may be made by those skilled in the art within the scope of the appended claims.

## Claims

1. A reamer for making a tapered hole comprising a conical core having a longitudinal axis terminating in first and second ends, said reamer comprising: first, second, third, and fourth flutes projecting from said core, said flutes being generally unequally spaced from each other about said longitudinal axis and tapering inwardly from said second end towards said first end of said core, said flutes winding helically about said longitudinal axis of said core, said first, second, and third flutes being spaced about said longitudinal axis from said fourth flute at said second end, by substantially 90, 160, and 255 degrees, respectively.

2. The reamer of Claim 1 wherein said flutes each have a helix angle of substantially 15 degrees to said longitudinal axis of said core.

3. The reamer of Claim 1 or 2 wherein each of said flutes incorporates a plurality of chip breaking grooves along said longitudinal axis of said core, said grooves on each flute being in a staggered relationship with said grooves on each other of said flutes.

4. The reamer of one of Claims 1—3 wherein said flutes extend from said first end to said second end of said core.

5. The reamer of claim 4 wherein said flutes each have a helix angle of substantially 15 degrees to said longitudinal axis of said core.

6. The reamer of Claim 4 wherein means to countersink the hole are attached to said second end of said core.

7. The reamer of anyone of Claims 2—6 also including a guide portion to align said reamer with said hole extending forwardly from said first end of said core to a front end of said guide portion, said guide portion comprising a cylindrical body having a plurality of nontapered flutes adapted to blend with and extend said tapered flutes, said flutes of said guide portion projecting outwardly from said guide portion in substantially uniform manner.

8. The reamer of Claim 7 wherein said flutes of said guide portion extend from substantially said front end to said first end of said core.

9. A reamer for making a tapered hole comprising a conical core having a longitudinal axis terminating in first and second ends, said reamer comprising: four flutes projecting from said core, said flutes being generally unequally spaced from each other about said longitudinal axis and tapering outwardly from said first end of said core, said flutes winding helically about said longitudinal axis of said core, said flutes having a helix angle of substantially 15° to said longitudinal axis of said core.

10. The reamer of Claim 9 wherein said flutes extend from said first end to said second end of said core.

11. The reamer of Claim 10 wherein each of said flutes incorporates a plurality of chip breaking grooves along said longitudinal axis of said core, said grooves on each flute being in a staggered relationship with said grooves on each other of said flutes.

12. The reamer of Claim 10 wherein means to countersink said hole are attached to said second end of said core.

13. The reamer of Claim 9 also including a guide portion to align said reamer with said hole extending forwardly from said first end of said core to a front end of said guide portion, said guide portion comprising a cylindrical body having a plurality of nontapered flutes adopted to blend with and extend said tapered flutes, said flutes of said guide portion projecting outwardly from said guide portion in substantially uniform manner.

14. The reamer of Claim 13 wherein said flutes of said guide portion extend from substantially said front end to said first end of said core.

## Patentansprüche

1. Eine Reibahle zur Herstellung eines verjüngten Lochs mit einem konischen Kern mit einer in ersten und zweiten Enden endenden Längsachse, wobei die Reibahle folgendes aufweist: erste, zweite, dritte und vierte vom Kern wegragende Rippen, die im ganzen mit ungleichen Abstand voneinander um die Längsachse herum angeordnet sind und sich vom zweiten Ende zum ersten Ende des Kerns hin verjüngen, wobei sich die Rippen schraubenlinienförmig um die Längsachse des Kerns winden und die ersten, zweiten und dritten Rippen um die Längsachse herum gegenüber der vierten Rippe an dem zweiten Ende um im wesentlich 90° bzw. 160° bzw. 255° mit Abstand angeordnet sind.

2. Reibahle nach Anspruch 1, wobei die Rippen jeweils einen Scheitelwinkel von im wesentlichen 15° gegenüber der Längsachse des Kerns besitzen.

3. Reibahle nach Anspruch 1 oder 2, wobei jede der Rippen eine Vielzahl von Spanbrechnuten entlang der Längsachse des Kerns aufweist, wobei die Nuten auf jeder Rippe versetzt bezüglich der Nuten auf jeder anderen der Rippen angeordnet sind.

4. Reibahle nach einem der Ansprüche 1 bis 3, wobei die Rippen sich von dem ersten Ende zum zweiten Ende des Kerns erstrecken.

5. Reibahle nach Anspruch 4, wobei die Rippen jeweils einen Scheitelwinkel von im wesentlichen 15° bezüglich der Längsachse des Kerns besitzen.

6. Reibahle nach Anspruch 4, wobei Mittel zur Anbringung einer Gegensenkung des Lochs am zweiten Ende des Kerns vorgesehen sind.

7. Reibahle nach einem der Ansprüche 2 bis 6 mit einem Führungsteil zum Ausrichten der Reibahle mit dem Loch und zwar von dem ersten Ende des Kerns aus sich nach vorne zu einem vorderen Ende des Führungsteils erstreckend, wobei der Führungsteil einen zylindrischen Körper aufweist mit einer Vielzahl von nicht-verjüngten Rippen, die geeignet sind sich mit den verjüngten Rippen zu vereinigen und sich mit diesen zu erstrecken, wobei die Rippen des Führungsteils von dem Führungsteil aus in einer im wesentlichen gleichförmigen Art und Weise nach außen ragen.

8. Reibahle nach Anspruch 7, wobei die Rippen des Führungsteils sich von im wesentlichen dem vorderen Ende zum erwähnten ersten Ende des Kerns erstrecken.

9. Reibahle zum Herstellen eines verjüngten Lochs mit einem konischen Kern mit einer in ersten und zweiten Ende endenden Längsachse wobei die Reibahle folgendes aufweist: vier vom Kern wegragende Rippen, die im allgemeinen gleichmäßig voneinander um die Längsachse herum mit Abstand angeordnet sind und sich nach außen vom ersten Ende des Kerns verjüngen, wobei die Rippen sich schraubenlinienförmig um die Längsachse des Kerns winden und einen Scheitelwinkel von im wesentlichen 15° bezüglich der Längsachse des Kerns aufweisen.

10. Reibahle nach Anspruch 9, wobei die Rippen sich vom ersten Ende zum zweiten Ende des Kerns erstrecken.

11. Reibahle nach Anspruch 10, wobei die Rippen eine Vielzahl von Spanbrechnuten entlang der Längsachse des Kerns aufweisen, wobei die Nuten an jeder Rippe versetzt bezüglich der Nuten an jeder anderen der Rippen angeordnet sind.

12. Reibahle nach Anspruch 10, wobei Mittel vorgesehen sind um das Loch mit einer Gegensenke zu versehen, und zwar sind diese Mittel angebracht am zweiten Ende des Kerns.

13. Reibahle nach Anspruch 9 mit einem Führungsteile zum Ausrichten der Reibahle mit dem Loch, und zwar sich nach vorne erstreckend von dem ersten Ende des Kerns zu einem vorderen Ende des Führungsteils, wobei der Führungsteil einen zylindrischen Körper aufweist mit einer Vielzahl von nicht-verjüngten Rippen, die geeignet sind sich mit den verjüngten Rippen zu vereinigen und sich mit diesen zu erstrecken, wobei die Rippen des Führungsteiles von dem Führungsteil in eine im wesentlichen gleichförmige Art und Weise nach außen ragen.

14. Reibahle nach Anspruch 13, wobei die Rippen des Führungsteils sich von dem vorderen Ende zu dem ersten Ende des Kerns erstrecken.

## Revendications

1. Alésoir destiné à former un trou tronconique, comprenant une âme tronconique ayant un axe longitudinal aboutissant à une première et une seconde extrémité, l'alésoir comprenant une première, une seconde, une troisième et une quatrième cannelure dépassant de l'âme, les cannelures ayant des espacements inégaux de façon générale autour de l'axe longitudinal et ayant une dimension qui diminue progressivement depuis la seconde extrémité vers la première extrémité de l'âme, les cannelures étant enroulées en hélice autour de l'axe longitudinale de l'âme, la première, la seconde et la troisième cannelure étant séparées de la quatrième cannelure, autour de l'axe longitudinale et à la seconde extrémité d'angles sensiblement égaux à 90, 160 et 255° respectivement.

2. Alésoir selon la revendication 1, dans lequel les cannelures ont chacune un angle d'hélice sensiblement égal à 15° par rapport à l'axe longitudinal de l'âme.

3. Alésoir selon la revendication 1 ou 2, dans lequel chacune des cannelures a plusieurs gorges de cassure de copeaux placées le long de l'axe longitudinal de l'âme, les gorges de chaque cannelure étant décalées par rapport aux gorges des autres cannelures.

4. Alésoir selon l'une des revendications 1 à 3, dans lequel des cannelures sont disposées de la première à la seconde extrémité de l'âme.

5. Alésoir selon la revendication 4, dans lequel les cannelures ont chacune un angle d'hélice sensiblement égal à 15° par rapport à l'axe longitudinal de l'âme.

6. Alésoir selon la revendication 4, dans lequel un dispositif de fraisage du trou est fixé à la seconde extrémité de l'âme.

7. Alésoir selon l'une quelconque des revendications 2 à 6, comprenant en outre une partie de guidage destinée à aligner l'alésoir sur le trou et dépassant en avant de la première extrémité de l'âme vers une extrémité avant de la partie de guidage, la partie de guidage ayant un corps cylindrique comprenant plusieurs cannelures non tronconiques, destinées à se raccorder aux cannelures tronconiques et à pénétrer dans celles-ci, les cannelures de la partie de guidage dépassant vers l'extérieur de la partie de guidage de manière pratiquement uniforme.

8. Alésoir selon la revendication 7, dans lequel les cannelures de la partie de guidage sont disposées pratiquement de l'extrémité avant à la première extrémité de l'âme.

9. Alésoir destiné à former un trou tronconique, comprenant une âme tronconique ayant un axe longitudinal et se terminant à une première et une seconde extrémité, l'alésoir comprenant quatre cannelures dépassant de l'âme, les cannelures ayant des espacements inégaux de façon générale les unes par rapport aux autres autour de l'axe longitudinal et présentant une variation progressive de dimension vers l'extérieur depuis la première extrémité de l'âme, les cannelures s'enroulant en hélice autour de l'axe longitudinal de l'âme, les cannelures ayant un angle d'hélice sensiblement égal à 15° par rapport à l'axe longitudinale de l'âme.

10. Alésoir selon la revendication 9, dans lequel les cannelures sont disposées de la première extrémité à la seconde extrémité de l'âme.

11. Alésoir selon la revendication 10, dans lequel chacune des cannelures a plusieurs gorges de cassure de copeaux le long de l'axe longitudinal de l'âme, les gorges de chaque cannelure étant décalées par rapport aux gorges de chaque autre cannelure.

12. Alésoir selon la revendication 10, dans lequel un dispositif de fraisage du trou est fixé à la seconde extrémité de l'âme.

13. Alésoir selon la revendication 9, comprenant aussi une partie de guidage destinée à aligner l'alésoir sur le trou et dépassant en avant de la première extrémité de l'âme jusqu'à une extrémité avant de la partie de guidage, la partie de guidage ayant un corps cylindrique qui a plusieurs cannelures non tronconques, destinées à se raccorder aux cannelures tronconiques et à prolonger celles-ci, les cannelures de la partie de guidage dépassant vers l'extérieur de la partie de guidage de manière sensiblement uniforme.

14. Alésoir selon la revendication 13, dans lequel les cannelures de la partie de guidage sont disposées pratiquement de l'extrémité avant à la première extrémité de l'âme.

EP  0 195 838  B1

FIG. 2

FIG. 1

FIG. 1A

1